(19) Europäisches Patentamt / European Patent Office / Office européen des brevets

(11) **EP 3 850 202 B1**

(12) **FASCICULE DE BREVET EUROPÉEN**

(45) Date de publication et mention
de la délivrance du brevet:
**10.08.2022 Bulletin 2022/32**

(21) Numéro de dépôt: **19778537.1**

(22) Date de dépôt: **01.10.2019**

(51) Classification Internationale des Brevets (IPC):
**F02C 9/48** *(2006.01)*   **F01D 15/00** *(2006.01)*
**F02K 3/06** *(2006.01)*

(52) Classification Coopérative des Brevets (CPC):
**F02C 9/48; F02K 3/06;** B64D 31/06;
B64D 2027/026; F05D 2220/76; F05D 2270/03;
F05D 2270/052; F05D 2270/42

(86) Numéro de dépôt international:
**PCT/EP2019/076660**

(87) Numéro de publication internationale:
**WO 2020/078720 (23.04.2020 Gazette 2020/17)**

(54) **PROCÉDÉ DE COMMANDE D'UNE TURBOMACHINE COMPORTANT UN MOTEUR ÉLECTRIQUE**

VERFAHREN ZUR STEUERUNG EINER STRÖMUNGSMASCHINE MIT EINEM ELEKTROMOTOR

METHOD FOR CONTROLLING A TURBOMACHINE COMPRISING AN ELECTRIC MOTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.10.2018 FR 1859636**

(43) Date de publication de la demande:
**21.07.2021 Bulletin 2021/29**

(73) Titulaire: **SAFRAN AIRCRAFT ENGINES**
**75015 Paris (FR)**

(72) Inventeur: **DJELASSI, Cedrik**
**77550 MOISSY-CRAMAYEL (FR)**

(74) Mandataire: **Argyma**
**14 Boulevard de Strasbourg**
**31000 Toulouse (FR)**

(56) Documents cités:
EP-A2- 1 990 519          WO-A1-2016/020618
FR-A1- 2 962 159          US-A1- 2005 056 021
US-A1- 2018 178 920

**Description**

## DOMAINE TECHNIQUE GENERAL ET ART ANTERIEUR

La présente invention concerne une turbomachine pour aéronef, en particulier, la commande d'une turbomachine afin de fournir la poussée désirée en fonction de la position de la manette de commande du pilote de l'aéronef.

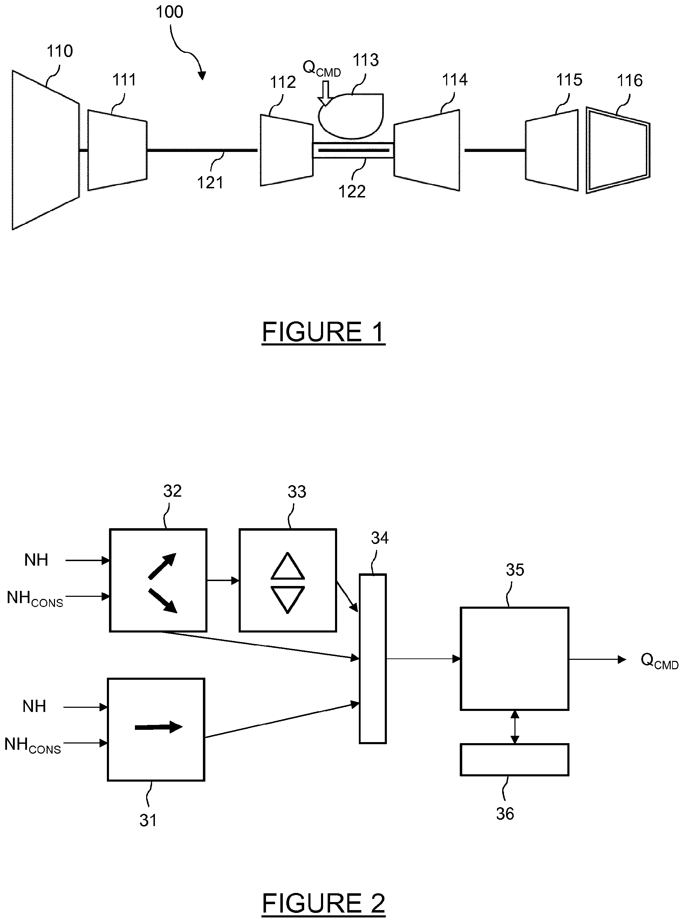

En référence à la figure 1, il est représenté de manière schématique une turbomachine 100 du type turboréacteur à double flux et double corps pour aéronef. De manière connue, la turbomachine 100 comprend, d'amont en aval dans le sens de l'écoulement des gaz, une soufflante 110, un compresseur basse pression 111, un compresseur haute pression 112, une chambre de combustion 113 qui reçoit une consigne de débit de carburant $Q_{CMD}$, une turbine haute pression 114, une turbine basse pression 115 et une tuyère primaire d'échappement 116. Le compresseur basse pression (ou BP) 111 et la turbine basse pression 115 sont reliés par un arbre basse pression 121 et forment ensemble un corps basse pression. Le compresseur haute pression (ou HP) 112 et la turbine haute pression 114 sont reliés par un arbre haute pression 122 et forment ensemble, avec la chambre de combustion, un corps haute pression. La soufflante 110, qui est entraînée par l'arbre BP 121, comprime l'air ingéré. Cet air se divise en aval de la soufflante 110 entre un flux d'air secondaire qui est dirigé directement vers une tuyère secondaire (non représentée) par laquelle il est éjecté pour participer à la poussée fournie par la turbomachine 100, et un flux dit primaire qui pénètre dans le générateur de gaz, constitué par le corps basse pression et le corps haute pression, puis qui est éjecté dans la tuyère primaire 116. De manière connue, pour modifier le régime du turbomachine 100, le pilote de l'aéronef modifie la position d'une manette de commande qui permet de modifier la consigne de débit de carburant $Q_{CMD}$ dans la chambre de combustion 113.

La conception d'une turbomachine 100 nécessite de prendre en compte une marge suffisante contre le phénomène dit de pompage. Ce phénomène qui résulte d'une incidence excessive du flux d'air sur les aubes d'un des compresseurs aboutit à des fluctuations importantes et rapides de la pression en aval du compresseur concerné et peut conduire à une extinction de la chambre de combustion 113. Il génère en outre des à-coups importants sur les aubes du compresseur et peut ainsi conduire à des dégradations mécaniques. Il convient donc tout particulièrement d'éviter son apparition. Le fonctionnement d'un compresseur en utilisation est généralement représenté par un diagramme qui exprime le rapport de pression obtenu entre la sortie et l'entrée, en fonction du débit d'air qui le traverse ; ce diagramme est en outre paramétré en fonction de la vitesse de rotation du compresseur. Dans ce diagramme figure une ligne de pompage qui constitue la limite maximale en taux de compression à ne pas dépasser, pour ne pas risquer l'apparition d'un phénomène de pompage. De manière connue, on définit une ligne, dite de fonctionnement, associant les taux de compression obtenus en fonction du débit, lorsque la turbomachine 100 est en fonctionnement stabilisé. Le positionnement de cette ligne de fonctionnement est laissé à l'appréciation du concepteur de la turbomachine 100 et la distance de cette ligne de fonctionnement à la ligne de pompage représente la marge au pompage. Il convient de remarquer que le rendement du compresseur (travail de compression fourni à l'air, rapporté au travail fourni pour l'entraîner en rotation) est, en première approximation, meilleur au fur et à mesure que l'on se rapproche de la ligne de pompage. A contrario, les accélérations demandées par le pilote à partir d'un fonctionnement stabilisé (phase transitoire) pour obtenir une augmentation de la poussée, se traduisent au niveau du compresseur par une excursion du point de fonctionnement qui s'effectue en direction de la ligne de pompage.

En effet, une injection supplémentaire de carburant dans la chambre de combustion 113 provoque une élévation quasi instantanée du taux de compression, alors même que le régime de rotation n'a pas le temps d'augmenter du fait de l'inertie. La variation d'enthalpie apportée au fluide par la combustion du carburant ajouté génère alors une augmentation du travail fourni par chaque turbine et, par conséquent une augmentation de la vitesse de rotation du corps correspondant. Ceci se traduit au niveau du diagramme du compresseur par un retour du point de fonctionnement sur la ligne de fonctionnement lorsque le régime se stabilise à nouveau, à un point de fonctionnement qui correspond à un débit plus élevé que celui du point de fonctionnement précédent.

Le concepteur d'une turbomachine 100 doit donc essayer d'optimiser le placement de la ligne de fonctionnement en la plaçant le plus haut possible, de façon à bénéficier de meilleurs rendements pour ses compresseurs, tout en gardant une distance suffisante vis à vis de la ligne de pompage pour permettre des accélérations sûres.

Afin d'éviter tout phénomène de pompage, une turbomachine 100 comporte un système de régulation mis en oeuvre par une unité électronique. En référence à la figure 2, le système de régulation comprend un module de gestion stabilisée 31, un module de détection d'intention de transitoire 32, un module de génération d'une trajectoire de régime 33, un module de sélection 34, un module d'intégration 35 ainsi qu'un module de gestion de butée 36.

Le module de gestion stabilisée 31 fournit une grandeur de correction au module de sélection 34 en fonction de la différence entre le régime NH de la turbomachine 100 et le régime de consigne $NH_{CONS}$. Le régime de consigne $NH_{CONS}$ est proportionnel à la position de la manette de commande manipulable par le pilote de l'aéronef. Un tel module de gestion stabilisée 31 est connu de l'homme du métier et ne sera pas présenté plus en détails.

Le module de détection d'intention de transitoire 32 a pour but de détecter une intention de transitoire souhaitée par le pilote. Le module de détection d'intention de transitoire 32 détermine une différence entre le régime NH de la turbomachine 100 et le régime de consigne $NH_{CONS}$. Lorsque la manette de commande reste dans une position constante et que le module de gestion stabilisée 31 est mise en oeuvre, le régime réel NH de la turbomachine 100 est stationnaire et égal au régime de consigne $NH_{CONS}$. Si le pilote déplace la manette de commande, le régime de consigne $NH_{CONS}$ varie instantanément. Au contraire, le régime NH ne varie pas instantanément en raison de l'inertie de la turbomachine 100 et du module de gestion stabilisée 31. Ainsi, le module de détection d'intention de transitoire 32 détecte une intention de transitoire lorsque la différence entre le régime de consigne $NH_{CONS}$ et le régime réel NH est supérieure à un seuil prédéterminé S2.

Dans le cas d'une demande accélération, si l'écart de régime est supérieur au seuil prédéterminé S2 ($NH_{CONS}$-NH > S2), une demande d'accélération est détectée. De manière analogue, dans le cas d'une décélération, si l'écart de régime est supérieur au seuil prédéterminé S2 (NH - $NH_{CONS}$ > S2), une demande de décélération est détectée. Lorsque qu'une phase transitoire est détectée, le module de détection d'intention de transitoire 32 génère un signal d'activation, qui est transmis au module de génération d'une trajectoire de régime 33 et au module de sélection 34 comme illustré à la figure 2.

Dans le cas d'une demande accélération, le module de génération d'une trajectoire de régime 33 détermine une consigne de régime pour l'accélération (trajectoire d'accélération) $NH_{TRAJACC}$. De manière analogue, dans le cas d'une décélération, le module de génération d'une trajectoire de régime 33 détermine une consigne de régime pour la décélération (trajectoire de décélération) $NH_{TRAJDECEL}$. En fonction de la trajectoire générée, le module de génération d'une trajectoire de régime 33 fournit une grandeur de correction au module de sélection 34.

Un tel module de génération d'une trajectoire de régime 33 est connu de l'homme du métier, en particulier par la demande de brevet US2013/0008171 et la demande de brevet FR2977638A1, et ne sera pas présenté plus en détails. EP 1 990 519 A2 divulgue un procédé de commande d'une turbomachine de l'art antérieur.

Dans cet exemple, lorsque le module de sélection 34 reçoit un signal d'activation du module de détection d'intention de transitoire 32, le module de sélection 34 sélectionne la grandeur de correction issue du module de gestion stabilisée 31 en l'absence de réception d'un signal d'activation et sélectionne la grandeur de correction issue du module de génération d'une trajectoire de régime 33 en cas de réception d'un signal d'activation. Un tel module de sélection 34 est connu de l'homme du métier et ne sera pas présenté plus en détails. La grandeur de correction sélectionnée est fournie au module d'intégration 35. Le module d'intégration 35 détermine la consigne de débit de carburant $Q_{CMD}$ par intégration de la grandeur de correction sélectionnée.

Le module de gestion de butée 36 limite la valeur de la consigne de débit de carburant $Q_{CMD}$ déterminée par le module d'intégration 35. De manière connue, le module de gestion de butée 36 met en oeuvre une butée, dite butée C/P connue de l'homme du métier afin de protéger la turbomachine à l'encontre du pompage. Dans cet exemple le module de gestion de butée 36 permet de définir des consignes de butée en accélération et en décélération. De telles butées sont connues de l'homme du métier et ne seront pas présentées plus en détails.

Le module de génération d'une trajectoire de régime 33 et le module de gestion de butée 36 permettent de définir une trajectoire d'accélération qui a pour conséquence de brider la consigne de débit de carburant $Q_{CMD}$ afin d'éviter un pompage. Un tel système de régulation est connu par la demande de brevet FR2977638A1 et ne sera pas présenté plus en détails. De manière incidente, il est connu de protéger un moteur contre le phénomène de pompage lors des transitoires en prenant en compte une consigne d'accélération lors de la régulation (voir par exemple US4543782 et US 2003/0094000).

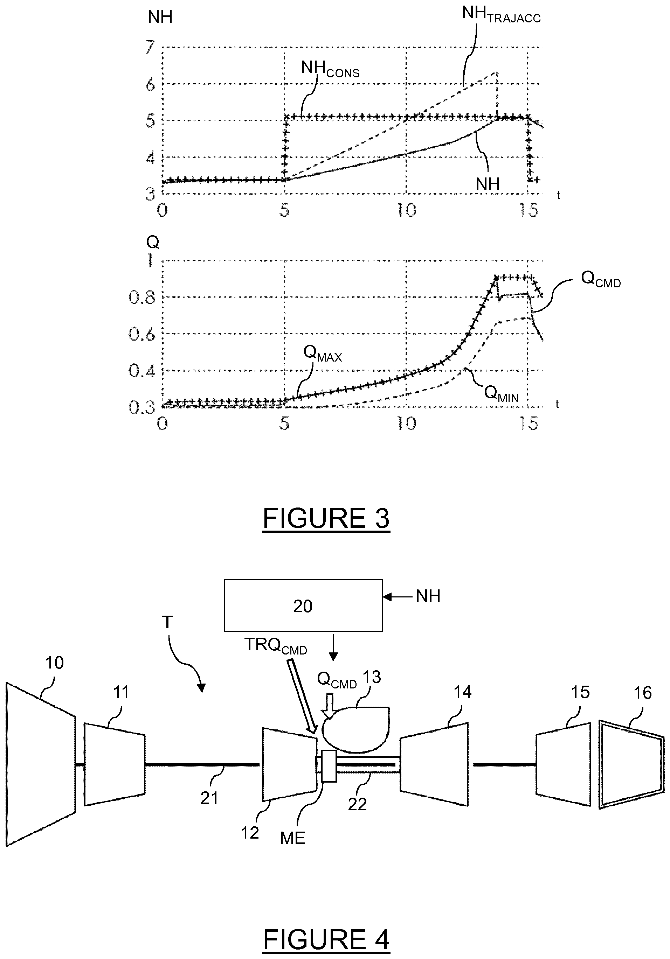

En référence à la figure 3, il est représenté, en partie supérieure, la consigne de régime $NH_{CONS}$, déterminée par la manette de commande du pilote, la trajectoire d'accélération prédéterminée $NH_{TRAJACC}$ et le régime courant NH. En partie inférieure, il est représenté le débit de carburant de butée maximale $Q_{MAX}$ (représentée par une ligne +++), le débit de carburant de butée minimale $Q_{MIN}$ (représentée par une ligne ---), la consigne de débit de carburant $Q_{CMD}$ (représentée par une ligne continue).

Lorsque le pilote commande une accélération du régime $NH_{CONS}$, le régime courant NH augmente de manière lente, avec un retard, étant donné que la consigne de carburant courante $Q_{CMD}$ est limitée par le débit de carburant de butée maximale $Q_{MAX}$ déterminé par le module de butée de carburant 36. Dans les faits, la saturation de $Q_{CMD}$ par $Q_{MAX}$ n'est pas systématique et dépend de l'intensité de l'accélération imposée par la trajectoire d'accélération prédéterminée $NH_{TRAJACC}$ et de la marge disponible vis-à-vis du pompage. Si cette marge n'est pas compatible avec le degré d'accélération demandé pour suivre les trajectoires de régime alors ceci conduit à une limitation de $Q_{CMD}$ par $Q_{MAX}$. Le régime courant NH n'arrive pas à suivre la trajectoire d'accélération $NH_{TRAJACC}$. Il a été présenté une limitation dans le cadre d'une demande d'accélération vis-à-vis du pompage mais il en va de même pour une demande de décélération vis-à-vis de la marge par rapport à l'extinction de la turbomachine.

Afin d'améliorer le temps de réponse d'une turbomachine lors d'une phase transitoire (accélération, décélération, etc.), il a été proposé d'équiper la turbomachine avec un moteur électrique afin de fournir un couple électrique supplémentaire pour augmenter le régime de la turbomachine sans conduire à un phénomène de pompage. A cet effet, on connaît par le demande de brevet WO2016/020618 une turbomachine pour aéronef comprenant un moteur électrique pour prélever de la puissance sur l'arbre basse pression et injecter de la puissance sur l'arbre haute pression.

3

Un des objectifs de la présente invention est de permettre de réguler de manière optimale le couple électrique fourni par le moteur électrique afin d'optimiser le temps de réponse de la turbomachine tout en garantissant une marge de pompage suffisante et en limitant la consommation électrique du moteur électrique.

## PRESENTATION GENERALE DE L'INVENTION

A cet effet, l'invention concerne un procédé de commande d'une turbomachine comprenant une soufflante positionnée en amont d'un générateur de gaz et délimitant un flux primaire et un flux secondaire, ledit générateur de gaz étant traversé par le flux primaire et comprenant un compresseur basse pression, un compresseur haute pression, une chambre de combustion, une turbine haute pression et une turbine basse pression, ladite turbine basse pression étant reliée audit compresseur basse pression par un arbre de rotation basse pression et ladite turbine haute pression étant reliée audit compresseur haute pression par un arbre de rotation haute pression, la turbomachine comprenant un moteur électrique formant un dispositif d'injection de couple sur l'arbre de rotation haute pression, procédé dans lequel une consigne de débit de carburant $Q_{CMD}$ dans la chambre de combustion et une consigne de couple $TRQ_{CMD}$ fourni au moteur électrique sont déterminés, le procédé de commande comportant :

- une étape de mise en œuvre d'une première boucle de régulation de carburant afin de déterminer la consigne de débit de carburant $Q_{CMD}$ comprenant :

  i. une étape de détection d'une intention de transitoire de régime TopAccel, TopDecel en fonction d'une différence entre un régime courant NH et une consigne de régime déterminée $NH_{CONS}$,
  ii. une étape de détermination d'une consigne de régime de transitoire NHTrajAccelCons, NHTrajDecelCons,
  iii. une étape de détermination d'une grandeur de correction de carburant $\Delta Q_{CMD}$ en fonction de la consigne de régime de transitoire NHTrajAccelCons, NHTrajDecelCons et
  iv. une étape de détermination de la consigne de débit de carburant $Q_{CMD}$ en fonction de la grandeur de correction de carburant $\Delta Q_{CMD}$

- une étape de mise en oeuvre d'une deuxième boucle de régulation de couple afin de déterminer la consigne de couple $TRQ_{CMD}$ comprenant

  i. une étape de détermination d'une grandeur de correction de couple $\Delta TRQ_{CMD}$ en fonction de la consigne de régime de transitoire NHTrajAccelCons, NHTrajDecelCons et
  ii. une étape de détermination de la consigne de couple $TRQ_{CMD}$ en fonction de la grandeur de correction de couple $\Delta TRQ_{CMD}$.

Grâce à l'invention, la deuxième boucle de régulation de couple permet d'agir de concert avec la première boucle de carburant quand cette dernière est limitée dans sa régulation, en particulier, du fait des limitations pour éviter un pompage ou une extinction de la turbomachine. Ainsi, le régime courant de la turbomachine peut suivre de manière réactive la consigne de trajectoire. L'opérabilité de la turbomachine est ainsi améliorée.

De plus, la deuxième boucle de régulation de couple permet avantageusement d'écarter les limites de pompage et d'extinction de la turbomachine pour permettre une meilleure régulation de la consigne de carburant. Autrement dit, la deuxième boucle de régulation de couple permet avantageusement d'améliorer la première boucle de régulation du carburant. De manière avantageuse, la deuxième boucle de régulation de couple ne se substitue pas à la première boucle de régulation de carburant mais vient à son soutien lorsque des limites de fonctionnement sont atteintes. La régulation du régime n'est ainsi pas bouleversée dans ses fondamentaux, ce qui assure une régulation fiable.

De manière préférée, le procédé de commande comprend :

- au cours de l'étape de mise en œuvre de la première boucle de régulation de carburant, une étape de détection d'une butée de consigne de carburant TopButeeAccel, TopButeeDecel,
- au cours de l'étape de mise en oeuvre de la deuxième boucle de régulation de couple, une étape de mise à zéro de la consigne de couple $TRQ_{CMD}$, l'étape de mise à zéro de la consigne de couple $TRQ_{CMD}$ étant inhibée en cas de détection d'une intention de transitoire de régime TopAccel, TopDecel et d'une détection d'une butée de consigne de carburant TopButeeAccel, TopButeeDecel.

De manière avantageuse, le procédé de commande comporte une étape de mise à zéro de la consigne de couple $TRQ_{CMD}$ qui est mise en oeuvre de manière continue mais inhibée lorsque les limites de régulation de la consigne de carburant sont atteintes. Autrement dit, le couple électrique n'est pas utilisé en permanence afin d'éviter une consommation électrique excessive. Le couple électrique est injecté sur l'arbre haute pression lorsque les limites de régulation de la consigne de carburant sont atteintes (pompage, extinction, etc.) afin de permettre de les écarter. En d'autres termes, lors de son injection, le couple électrique permet d'offrir une marge de régulation à la première boucle de régulation de carburant. Une fois cette marge obtenue, la consigne de couple $TRQ_{CMD}$ peut être mise à zéro, en particulier, de manière progressive.

De préférence, la consigne de couple $TRQ_{CMD}$ est mise à zéro de manière progressive, de préférence, selon au moins un gradient de réduction. Une mise à zéro progressive s'oppose à une mise à zéro brutale qui induirait des perturbations du régime de la turbomachine. Une mise à zéro progressive selon un gradient de réduction permet de contrôler la vitesse à laquelle la deuxième boucle de régulation de couple diminue son influence afin de permettre à la première boucle de régulation de carburant de reprendre son influence.

De manière préférée, le gradient de réduction est fonction du temps de réponse de la première boucle de régulation de carburant. Autrement dit, la vitesse de mise à zéro est optimale étant donné qu'elle est déterminée en fonction de la première boucle de régulation de carburant. Ainsi, une baisse d'influence de la deuxième boucle de régulation du couple est directement compensée par la première boucle de régulation de carburant.

De manière avantageuse, le procédé de commande comprend une étape de double intégration de la grandeur de correction de couple $\Delta TRQ_{CMD}$ afin de déterminer la consigne de couple $TRQ_{CMD}$. Une double intégration est avantageuse étant donné qu'elle permet d'assurer une erreur permanente de vitesse nulle, et donc un temps d'accélération ou de décélération prédéterminé.

De préférence, la consigne de couple $TRQ_{CMD}$ est bornée entre une valeur maximale de couple $TRQ_{max}$ déterminée par la structure du moteur électrique ME et une valeur minimale de couple $TRQ_{min}$ déterminée par la structure du moteur électrique ME.

L'invention concerne également un programme d'ordinateur comprenant des instructions pour l'exécution des étapes d'un procédé de commande tel que présenté précédemment lorsque ledit programme est exécuté par un ordinateur. L'invention vise aussi un support d'enregistrement dudit programme d'ordinateur. Le support d'enregistrement mentionné ci-avant peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne également en outre une unité électronique de commande pour turbomachine comprenant une mémoire incluant des instructions d'un programme d'ordinateur tel que présenté précédemment.

L'invention concerne également aussi une turbomachine comprenant une unité électronique telle que présentée précédemment.

## PRESENTATION DES FIGURES

L'invention sera mieux comprise à la lecture de la description qui va suivre, donnée uniquement à titre d'exemple, et se référant aux dessins annexés sur lesquels :

- la figure 1 est une représentation schématique d'une turbomachine selon l'art antérieur,
- la figure 2 est une représentation schématique d'un système de régulation d'une consigne de débit de carburant selon l'art antérieur,
- la figure 3 est une représentation schématique de l'augmentation du régime du moteur et de la consigne de débit de carburant suite à une commande d'accélération par un pilote selon l'art antérieur,
- la figure 4 est une représentation schématique d'une turbomachine selon une forme de réalisation de l'invention,
- la figure 5 est une représentation schématique d'un système de régulation d'une consigne de débit de carburant et d'une consigne de couple selon l'invention,
- la figure 6 est une représentation schématique d'une première boucle de régulation de carburant du système de régulation de la figure 5,
- la figure 7 est une représentation schématique d'une deuxième boucle de régulation de couple du système de régulation de la figure 5,
- la figure 8 est une représentation schématique d'un module d'intégration de la deuxième boucle de régulation de couple de la figure 7 et
- la figure 9 est une représentation schématique de l'augmentation du régime du moteur, de la consigne de débit de carburant et de la consigne de couple suite à une commande d'accélération par un pilote selon l'invention.

Il faut noter que les figures exposent l'invention de manière détaillée pour mettre en oeuvre l'invention, lesdites figures pouvant bien entendu servir à mieux définir l'invention le cas échéant.

## DESCRIPTION D'UN OU PLUSIEURS MODES DE REALISATION ET DE MISE EN OEUVRE

En référence à la figure 4, il est représenté de manière schématique une turbomachine T du type turboréacteur à double flux et double corps pour aéronef. De manière connue, la turbomachine T comprend, d'amont en aval dans le sens de l'écoulement des gaz, une soufflante 10, un compresseur basse pression 11, un compresseur haute pression 12, une chambre de combustion 13 qui reçoit une consigne de débit de carburant $Q_{CMD}$, une turbine haute pression 14, une turbine basse pression 15 et une tuyère primaire d'échappement 16. Le compresseur basse pression (ou BP) 11 et la turbine basse pression 15 sont reliés par un arbre basse pression 21 et forment ensemble un corps basse pression. Le compresseur haute pression (ou HP) 12 et la turbine haute pression 14 sont reliés par un arbre haute pression 22 et forment ensemble, avec la chambre de combustion 13, un corps haute pression. La soufflante 10, qui est entraînée par l'arbre BP 21, comprime l'air ingéré. Cet air se divise en aval de la soufflante entre un flux d'air secondaire qui est dirigé directement vers une tuyère secondaire (non représentée) par laquelle il est éjecté pour participer à la poussée fournie par la turbomachine 100, et un flux dit primaire qui pénètre dans le générateur de gaz, constitué par le corps basse pression et le corps haute pression, puis qui est éjecté dans la tuyère primaire 16. De manière connue, pour modifier le régime du turbomachine T, le pilote de l'aéronef modifie la position d'une manette de commande qui permet de modifier la consigne de débit de carburant $Q_{CMD}$ dans la chambre de combustion 13.

En référence à la figure 4, la turbomachine T comporte en outre un moteur électrique ME configuré pour fournir un couple supplémentaire à l'arbre haute pression 22. Le fonctionnement de la turbomachine T est commandé par une unité électronique 20 qui obtient des signaux représentant des paramètres de fonctionnement de la turbomachine T, notamment le régime NH de la turbomachine T, pour fournir la consigne de débit de carburant $Q_{CMD}$ et une consigne de couple $TRQ_{CMD}$ au moteur électrique ME.

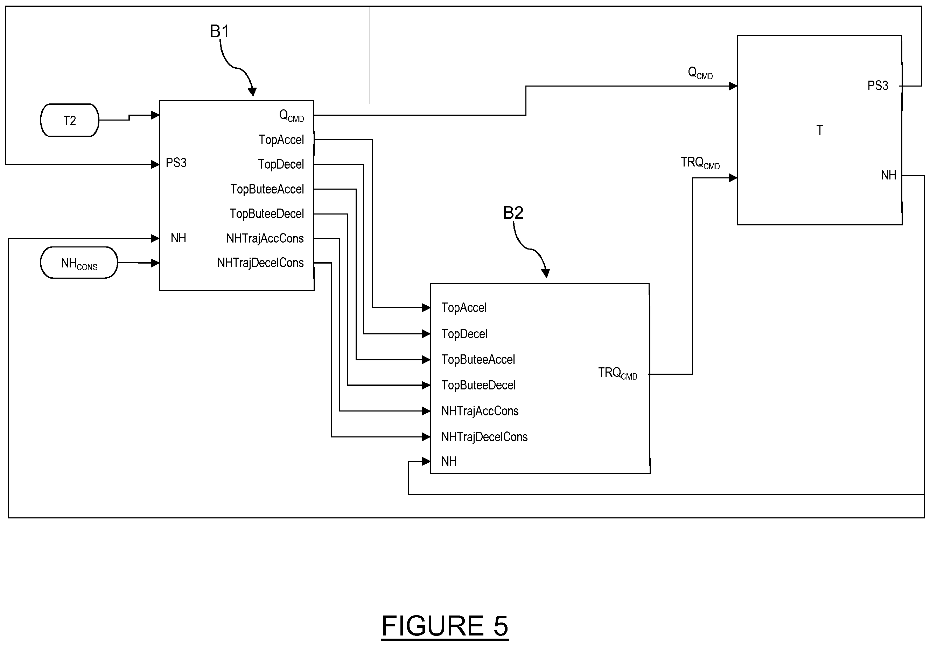

Comme illustré à la figure 5, l'unité électronique 20 comporte un système de régulation comportant une première boucle B1 de régulation de la consigne de débit de carburant $Q_{CMD}$, désignée par la suite « première boucle de carburant B1 », et une deuxième boucle B2 de régulation de la consigne de couple électrique $TRQ_{CMD}$, désignée par la suite « deuxième boucle de couple B2 ».

Comme illustré à la figure 5, la première boucle de carburant B1 comporte :

- une entrée de régime NH de la turbomachine T
- une entrée de régime de consigne $NH_{CONS}$ définie par la position de la manette de commande manipulable par le pilote de l'aéronef,
- une sortie de consigne de débit de carburant $Q_{CMD}$ transmise à la turbomachine T et
- une pluralité d'indicateurs de sortie :

  - un indicateur d'une demande de transitoire d'accélération TopAccel
  - un indicateur d'une demande de transitoire de décélération TopDecel
  - un indicateur d'une butée d'accélération TopButeeAccel définie par la saturation de la commande des correcteurs par la butée C/P d'accélération
  - un indicateur d'une butée de décélération TopButeeDecel définie par la saturation de la commande des correcteurs par la butée C/P d'extinction
  - une consigne de trajectoire de régime pour l'accélération NHTrajAccelCons
  - une consigne de trajectoire de régime pour la décélération NHTrajDecelCons

Toujours en référence à la figure 5, la deuxième boucle de couple B2 reçoit en entrée tous les indicateurs de sortie générés par la première boucle de carburant B1, c'est-à-dire TopAccel, TopDecel, TopButeeAccel, TopButeeDecel, NHTrajAccelCons, NHTrajDecelCons, ainsi que l'entrée de régime NH de la turbomachine T. De manière avantageuse, grâce à ce système de régulation, la deuxième boucle de couple B2 permet de fournir une consigne de couple $TRQ_{CMD}$ adaptive en fonction du comportement de la boucle de carburant B1 qui demeure prioritaire.

Dans cet exemple, la première boucle de carburant B1 comporte également une entrée de pression statique dans la chambre de combustion PS3.

La structure et le fonctionnement de chaque boucle B1, B2 vont être dorénavant présentés de manière détaillée.

## Première boucle de régulation du carburant B1

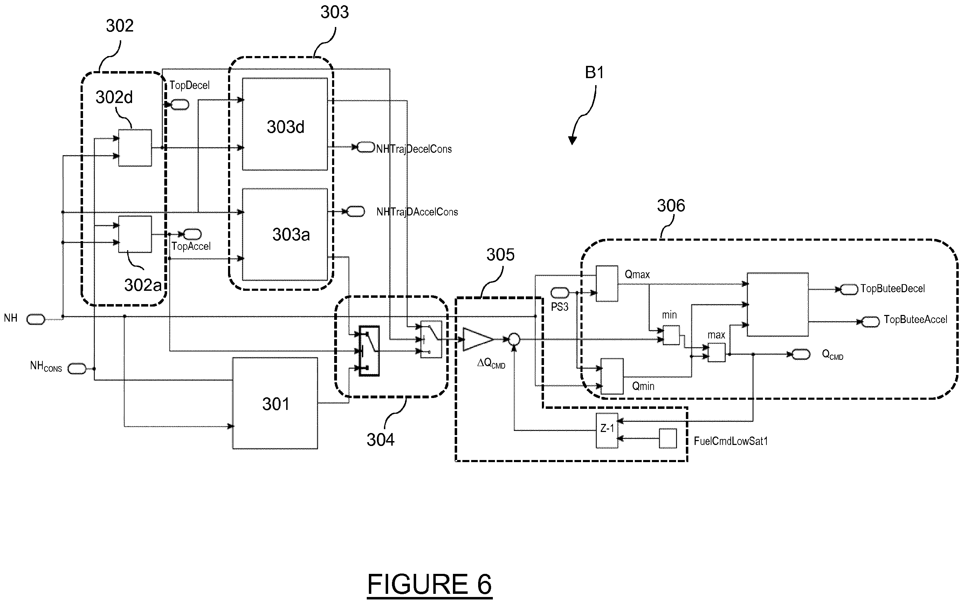

De manière connue, en référence à la figure 6, la première boucle de carburant B1 comprend un module de gestion stabilisée 301, un module de détection d'intention de transitoire 302, un module de génération d'une trajectoire de régime 303, un module de sélection 304, un module d'intégration 305 ainsi un module de gestion de butée 306 qui remplit une fonction de saturation de l'intégration et donc de la commande de carburant $Q_{CMD}$.

Comme cela sera présenté par la suite, le module de génération d'une trajectoire de régime 303 est également configuré pour générer une commande pour le contrôle de cette trajectoire.

Le module de gestion stabilisée 301 fournit une grandeur de correction au module de sélection 304 en fonction de la différence entre le régime NH de la turbomachine T et le régime de consigne $NH_{CONS}$. Un tel module de gestion stabilisée 301 est connu de l'homme du métier et ne sera pas présenté plus en détails.

Le module de détection d'intention de transitoire 302 a pour but de détecter une intention de transitoire souhaitée par le pilote. Le module de détection d'intention de transitoire 302 détermine une différence entre le régime NH de la turbomachine T et le régime de consigne $NH_{CONS}$. Lorsque la manette de commande reste dans une position constante et que le module de gestion stabilisée 301 est mise en oeuvre, le régime réel NH de la turbomachine T est stationnaire et égal au régime de consigne $NH_{CONS}$. Si le pilote déplace la manette de commande, le régime de consigne $NH_{CONS}$ varie instantanément. Au contraire, le régime NH ne varie pas instantanément en raison de l'inertie de la turbomachine T et du module de gestion stabilisée 301. Ainsi, le module de détection d'intention de transitoire 302 détecte une intention de transitoire lorsque la différence entre le régime de consigne $NH_{CONS}$ et le régime réel NH est supérieure à un seuil prédéterminé S3.

Selon l'invention, le module de détection d'intention de transitoire 302 fournit également un indicateur de demande de transitoire d'accélération TopAccel et un indicateur d'une demande de transitoire de décélération TopDecel. Dans le cas d'une accélération, si l'écart de régime est supérieur au seuil prédéterminé S3 ($NH_{CONS}$- NH > S3), l'indicateur de demande de transitoire d'accélération TopAccel est activé. Cette fonction est mise en oeuvre dans un sous-module d'accélération 302a qui est un comparateur. De manière analogue, dans le cas d'une décélération, si l'écart de régime est supérieur au seuil prédéterminé S3 (NH - $NH_{CONS}$ > S3), l'indicateur d'une demande de transitoire de décélération TopDecel est activé. Cette fonction est mise en oeuvre dans un sous-module de décélération 302d qui est un comparateur. A titre d'exemple, le seuil S3 est de 200 tours/minutes.

Lorsque qu'une phase transitoire est détectée, le module de détection d'intention de transitoire 302 génère un signal d'activation, qui est transmis au module de génération d'une trajectoire de régime 303 et au module de sélection 304 comme illustré à la figure 6.

Dans le cas d'une accélération, le module de génération d'une trajectoire de régime 303 détermine une consigne de régime pour l'accélération (trajectoire d'accélération) NHTrajAccelCons. De manière analogue, dans le cas d'une décélération, le module de génération d'une trajectoire de régime 303 détermine une consigne de régime NH pour la décélération (trajectoire de décélération) NHTrajDecelCons. Un tel module de génération d'une trajectoire de régime 303 est connu de l'homme du métier et ne sera pas présenté plus en détails. De plus, le module de génération 303 est également configuré pour générer une grandeur de correction qui permet de suivre le cas échéant la trajectoire consigne.

Dans cet exemple, lorsque le module de sélection 304 reçoit un signal d'activation du module de détection d'intention de transitoire 302, le module de sélection 304 sélectionne la grandeur de correction issue du module de gestion stabilisée 301 en l'absence de réception d'un signal d'activation et sélectionne la grandeur de correction issue du module de génération d'une trajectoire de régime 303 en cas de réception d'un signal d'activation. Un tel module de sélection 304 est connu de l'homme du métier et ne sera pas présenté plus en détails.

La grandeur de correction de carburant sélectionnée $\Delta Q_{CMD}$ est fournie au module d'intégration 305. Le module d'intégration 305 détermine la consigne de débit de carburant $Q_{CMD}$ par intégration de la grandeur de correction de carburant $\Delta Q_{CMD}$.

Le module de gestion de butée 306 limite la valeur de la consigne de débit de carburant $Q_{CMD}$ déterminée par le module d'intégration 305. De manière connue, le module de gestion de butée 306 met en oeuvre une butée, dite butée C/P connue de l'homme du métier. Dans cet exemple le module de gestion de butée 306 permet de définir des consignes de butée en accélération et en décélération. A cet effet, dans le cas d'une accélération, le module de gestion de butée 306 permet de définir un indicateur d'une saturation de la commande des correcteurs par la butée C/P d'accélération TopButeeAccel. De manière analogue, dans le cas d'une décélération, le module de gestion de butée 306 permet de définir un indicateur d'une saturation de la commande des correcteurs par la butée C/P d'extinction TopButeeDecel. De telles butées sont connues de l'homme du métier et ne seront pas présentées plus en détails. De manière préférée, le module de gestion de butée 306 détermine les butées en fonction de la pression statique dans la chambre de combustion PS3 et du régime NH (régime corps haute pression).

Comme indiqué précédemment, une telle régulation est optimale pour limiter la consigne de carburant $Q_{CMD}$ transmise à la turbomachine T mais induit des temps de réponse important.

Pour éliminer cet inconvénient, une deuxième boucle de couple B2 est couplée à la première boucle de carburant B1 pour déterminer une consigne de couple $TRQ_{CMD}$ optimale. A cet effet, contrairement à l'art antérieur, la première boucle de carburant B1 communique à la deuxième boucle de couple B2 les différents indicateurs de sortie : TopAccel, TopDecel, NHTrajAccelCons, NHTrajDecelCons, TopButeeAccel, TopButeeDecel.

## Deuxième boucle de régulation du couple B2

La deuxième boucle de régulation du couple B2 vise à utiliser avec parcimonie le moteur électrique ME. Ainsi, une consigne de couple $TRQ_{CMD}$ n'est activée que lorsque les trajectoires sont limitées (TopButeeAccel ou TopButee-Decel) et que l'écart entre la consigne de régime $NH_{CONS}$ et le régime réel NH indique un besoin d'activation des contrôles en transitoire (TopAccel ou TopDecel). Autrement dit, une consigne de couple $TRQ_{CMD}$ n'est activée que lorsque la consigne de carburant $Q_{CMD}$ est bridée dans sa plage de fonctionnement.

Comme cela sera présenté par la suite, le couple électrique fourni $TRQ_{CMD}$ permet d'écarter le point de fonctionnement des limites de fonctionnement et ainsi d'offrir une marge de commande pour adapter de nouveau la consigne de carburant $Q_{CMD}$. Grâce à l'invention, la première boucle de carburant B1 et la deuxième boucle de couple B2 échangent pour améliorer l'opérabilité de la turbomachine T (temps de réponse, etc.) tout en limitant la consommation d'énergie électrique par le moteur électrique ME.

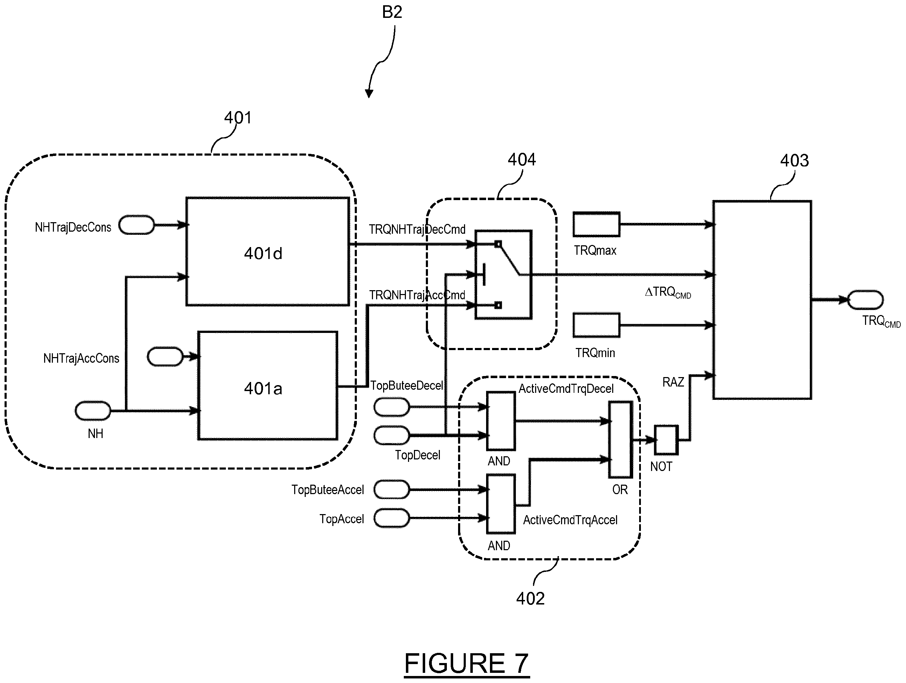

En référence à la figure 7, la deuxième boucle de régulation du couple B2 comporte un module de détermination de commande 401, un module de mise à zéro 402, un module d'intégration 403 et un commutateur 404.

Le module de détermination de commande 401 comporte :

- une entrée de régime courant NH de la turbomachine
- la consigne de régime NH pour l'accélération (trajectoire d'accélération) NHTrajAccelCons fournissant une grandeur de consigne pour la commande de couple
- la consigne de régime NH pour la décélération (trajectoire de décélération) NHTrajDecelCons fournissant une grandeur de consigne pour la commande de couple.

Le module de détermination de commande 401 comporte un sous-module de décélération 401d et un sous-module d'accélération 401a qui sont respectivement configurés pour calculer une commande de couple pour l'accélération (couple accélération) TRQTrajAccelCmd et une commande de couple pour la décélération (couple décélération) TRQTrajDecelCmd.

Dans cet exemple, le sous-module d'accélération 401a calcule une grandeur de correction, du type dérivée seconde, pour l'accélération (couple d'accélération) TRQTrajAccelCmd en fonction de la consigne de régime NH pour l'accélération (trajectoire de d'accélération) NHTrajAccelCons, et de l'entrée de régime courant NH. De manière préférée, le sous-module d'accélération 401a se présente sous la forme d'un correcteur de type double-intégrateur intégral qui répond à la fonction de transfert suivante :

$$RC_{NHTrans}(p) = K_{NH}^{-1} \cdot \frac{(1 + \tau_{NH} \cdot p)(1 + \tau_{Transit} \cdot p)}{\tau_{BF} \cdot \tau_{Transit} \, p^2}$$

fonction dans laquelle :

- K est une constante inverse prédéterminée et
- $\tau_{NH}$, $\tau_{Transit}$ et $\tau_{BF}$ sont des constantes de temps prédéterminées

La structure d'un tel sous-module d'accélération 401a est connue de l'homme du métier. La structure et la fonction du sous-module de décélération 401d sont analogues.

En référence à la figure 7, la sélection de la commande avant intégration par le module d'intégration 403 est assurée par un commutateur 404 afin de sélectionner la commande de décélération en décélération ou la commande d'accélération en accélération.

Le module de mise à zéro 402 comporte une pluralité d'indicateurs d'entrée issus de la première boucle de carburant B1 :

- l'indicateur d'une demande de transitoire d'accélération TopAccel
- l'indicateur d'une demande de transitoire de décélération TopDecel
- l'indicateur d'une butée d'accélération TopButeeAccel définie par la saturation de la commande des correcteurs par la butée C/P d'accélération
- l'indicateur d'une butée de décélération TopButeeDecel définie par la saturation de la commande des correcteurs par la butée C/P d'extinction.

Le module de mise à zéro 402 vise à mettre à zéro la consigne de couple $TRQ_{CMD}$. Comme cela sera présenté par la suite, la mise à zéro n'est pas brutale mais progressive. Le module de mise à zéro est mise en oeuvre de manière continue. Néanmoins, la mise à zéro est inhibée :

- lorsqu'une accélération est demandée et lorsque la butée d'accélération est déjà atteinte (TopAccel et TopButeeAccel activés) ou
- lorsqu'une décélération est demandée et lorsque la butée de décélération est déjà atteinte (TopDecel et TopButeeDecel activés).

Quand la consigne de carburant $Q_{CMD}$ de la première boucle de carburant B1 souhaite s'écarter de plage de fonctionnement autorisée, le module de mise à zéro 402 n'est pas remis à zéro. Ainsi, la consigne de couple $TRQ_{CMD}$ permet d'écarter le point de fonctionnement des limites de fonctionnement. Une mise à zéro du couple $TRQ_{CMD}$ n'est amorcée que lorsqu'une régulation par la consigne de carburant $Q_{CMD}$ est possible.

En d'autres termes, la deuxième boucle de couple B2 agit de manière synergique avec la première boucle de carburant B1. La deuxième boucle de couple B2 vient en support de la première boucle de carburant B1. En régime stabilisé, la consigne de couple $TRQ_{CMD}$ est ainsi mise à zéro pour limiter la consommation électrique et améliorer le rendement.

En référence à la figure 7, le module d'intégration 403 comporte :

- une entrée de correction recevant une grandeur de correction de couple $\Delta TRQ_{CMD}$ du commutateur 404
- une valeur maximale de couple $TRQ_{max}$ déterminée par la structure du moteur électrique ME
- une valeur minimale de couple $TRQ_{min}$ déterminée par la structure du moteur électrique ME
- une entrée de mise à zéro RAZ fournie par le module de mise à zéro 402
- une sortie de consigne de couple $TRQ_{CMD}$.

Dans cet exemple, le module d'intégration 403 est un double intégrateur, afin d'intégrer la grandeur de correction de couple $\Delta TRQ_{CMD}$. Cela permet d'assurer une erreur permanente de vitesse nulle, et donc un temps d'accélération ou de décélération prédéterminé.

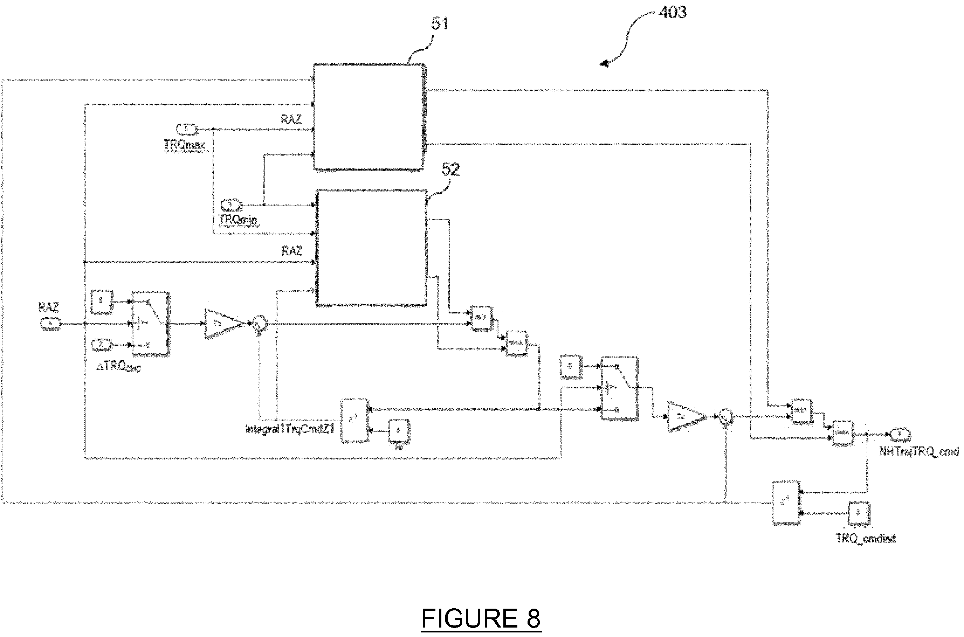

Un exemple de module d'intégration 403 est représenté de manière détaillée à la figure 8. Dans cet exemple de mise en oeuvre, le module d'intégration 403 permet de définir la consigne de couple $TRQ_{CMD}$ selon plusieurs rampes ou gradients. En référence à la figure 8, le module d'intégration 403 comporte deux modules de calcul des valeurs de saturation des intégrateurs 51, 52.

Comme illustré à la figure 8, les deux modules de calcul 51, 52 seront saturés afin de respecter les limitations de couple maximum $TRQ_{MAX}$ et minimum $TRQ_{MIN}$ liées aux contraintes de la machine électrique ME et éviter aussi la divergence des modules de calcul 51, 52 en cas de limitation de leurs demandes par la structure physique du moteur électrique ME.

Chaque module de calcul 51, 52 comporte une entrée de mise à zéro RAZ afin de réduire la valeur de la consigne de couple $TRQ_{CMD}$ de manière progressive.

En effet, la consigne de couple mécanique supplémentaire ou déficitaire $TRQ_{CMD}$ doit être supprimée une fois le transitoire terminé. En effet, le couple utilisé pour un transitoire ne peut pas être maintenu car il ne correspond plus forcément à un besoin courant et engendrerait une consommation électrique excessive non souhaitée.

A titre d'exemple, dans le cas d'une décélération, la deuxième boucle de couple B2 impose un couple résistif $TRQ_{CMD}$ afin de permettre au régime NH de baisser suivant la trajectoire déterminée, la turbomachine T atteint le régime de ralenti en fin de transitoire. Si l'on maintient le couple résistif $TRQ_{CMD}$ pendant la décélération sur la phase de ralenti stabilisé, le carburant alors nécessaire pour maintenir le ralenti devra compenser inutilement ce couple résistif qui n'a plus d'utilité sur cette phase de fonctionnement. Le rendement serait alors pénalisé. Ce raisonnement s'applique aussi bien dans une phase de fin d'accélération que dans une phase dans laquelle on alterne des accélérations et des décélérations.

Comme illustré à la figure 7, l'indicateur de mise à zéro RAZ permet de remettre à zéro chacun des intégrateurs 51, 52 lorsqu'il est activé. Cependant, pour éviter la perturbation du régime NH liée à la suppression trop rapide du couple électrique TRQ, la consigne de couple $TRQ_{CMD}$ est réduite de manière lente en suivant un gradient prédéterminé, dans cet exemple, un gradient de réduction QKGS (non représenté). En pratique, dans cet exemple, les valeurs des intégrateurs sont mémorisées et sont remises à zéro progressivement en fonction des valeurs passées. Lorsque l'indicateur de mise à zéro RAZ n'est plus à zéro, les valeurs des intégrateurs recommencent à croître.

De manière avantageuse, le gradient de réduction QKGS est prédéterminé en fonction du temps de réponse de la première boucle de carburant B1, le temps de réponse étant obtenu par essai et simulation. Ainsi, le module d'intégration 403 de la deuxième boucle de couple B2 diminue son influence sur le régime NH, ce qui permet de manière avantageuse à la première boucle de carburant B1 d'adapter la consigne de carburant $Q_{CMD}$ de manière efficace étant donné que l'apport du couple électrique a permis d'écarter le point de fonctionnement des limites $Q_{MAX}$, $Q_{MIN}$. La compensation réalisée par la première boucle de carburant B1 est naturelle et contrôlée.

Autrement dit, la deuxième boucle de couple B2 permet de soulager la première boucle de carburant B1 lors d'un transitoire. La consigne de couple $TRQ_{CMD}$ est ainsi mise à zéro lorsque les conditions d'activation de la régulation en couple ont disparu.

La suppression du couple TRQ apporté par la machine électrique ME doit être compensée simultanément par une adaptation de la consigne de carburant $Q_{CMD}$, sans quoi une perturbation du régime NH serait systématique. De manière avantageuse, l'adaptation de la consigne de carburant $Q_{CMD}$ est automatique et il n'est pas nécessaire de calculer de nouveaux indicateurs dans la deuxième boucle de couple B2 pour la première boucle de carburant B1.

Il va dorénavant être présenté un exemple de mise en œuvre d'un procédé de commande d'une turbomachine dans lequel une consigne de débit de carburant $Q_{CMD}$ et une consigne de couple électrique $TRQ_{CMD}$ sont déterminées.

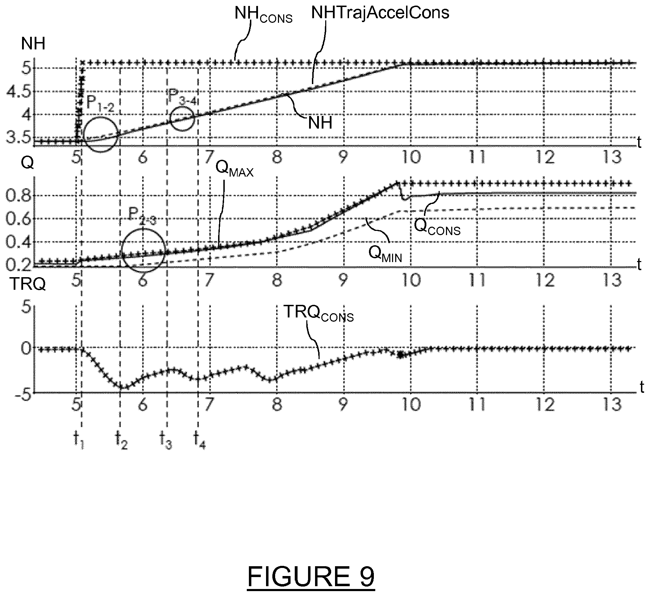

Dans cet exemple de mise en œuvre, le pilote manipule la manette de commande pour augmenter le régime de la turbomachine T à un instant t1=5 secondes comme illustré à la figure 9.

La première boucle de régulation B1 détecte, via le module de détection d'intention de transitoire 302, un transitoire de régime et émet un indicateur d'une demande de transitoire d'accélération TopAccel. De même, le module de génération d'une trajectoire de régime 303 détermine une consigne de régime pour l'accélération (trajectoire d'accélération) NHTrajAccelCons. Comme illustré à la figure 9, la trajectoire d'accélération se présente sous la forme d'une pente. De plus, le module de gestion de butée 306 limite la valeur de la consigne de débit de carburant $Q_{CMD}$ et définit une consigne de butée en accélération TopButéeAccel qui impose une consigne maximale de carburant $Q_{MAX}$.

Au cours de la période P1-2, définie entre les instants t1 et t2, le régime courant NH est inférieur à la consigne de trajectoire d'accélération NHTrajAccelCons car la consigne de carburant $Q_{CMD}$ est limitée par la consigne maximale de carburant $Q_{MAX}$.

Au cours de cette période P1-2, la consigne de couple $TRQ_{CMD}$ augmente progressivement (par convention sur la figure 9, une augmentation de couple possède une valeur négative) jusqu'à l'instant t2. Au fur et à mesure de l'augmentation de la consigne de couple $TRQ_{CMD}$, le régime courant NH augmente du fait du couple électrique supplémentaire et permet de suivre de manière réactive la trajectoire d'accélération NHTrajAccelCons, ce qui est très avantageux. En outre, au fur et à mesure de l'augmentation de la consigne de couple $TRQ_{CMD}$, la consigne de carburant $Q_{CMD}$ s'écarte de la consigne maximale de carburant $Q_{MAX}$, ce qui permet de fournir une plage de régulation pour la consigne de carburant $Q_{CMD}$ qui n'est plus bridée.

Aussi, au cours de la période P2-3, définie entre les instants t2 et t3, la première boucle de carburant B1 permet d'adapter la consigne de carburant $Q_{CMD}$ pour que le régime courant NH suive de manière réactive la trajectoire d'accélération NHTrajAccelCons. Comme la consigne de carburant $Q_{CMD}$ est écartée de la consigne maximale de carburant $Q_{MAX}$, la consigne de butée en accélération TopButéeAccel n'est plus activée. Aussi, la mise à zéro de la consigne de couple $TRQ_{CMD}$ peut être mise en oeuvre sur la période P2-3. Comme illustré à la figure 9, la mise à zéro est réalisée de manière progressive pour ne pas réduire de manière brusque le régime courant NH et permettre à la première boucle de carburant B1 de reprendre la main pour la régulation.

A l'instant t3, de manière analogue à l'instant t1, la consigne de carburant $Q_{CMD}$ est limitée par la consigne maximale de carburant $Q_{MAX}$. La consigne de butée en accélération TopButéeAccel est alors activée, ce qui inhibe la mise à zéro de la consigne de couple $TRQ_{CMD}$ qui augmente de nouveau. A l'instant t3, la consigne de couple $TRQ_{CMD}$ n'a pas eu le temps de s'annuler. De manière analogue, sur la période P3-4, définie entre les instants t3 et t4, le régime courant NH est inférieur à la consigne de trajectoire d'accélération NHTrajAccelCons car la consigne de carburant $Q_{CMD}$ est limitée par la consigne maximale de carburant $Q_{MAX}$. La consigne de couple $TRQ_{CMD}$ augmente progressivement jusqu'à l'instant t4.

Grâce à l'invention, le moteur électrique ME est utilisé avec parcimonie pour permettre un suivi de trajectoire optimal permettant d'offrir une marge de régulation de la consigne de carburant $Q_{CMD}$. La première boucle de carburant B1 et la deuxième boucle de couple B2 sont mises en oeuvre de manière synergique pour optimiser le suivi de la trajectoire de régime et ainsi améliorer l'opérabilité de la turbomachine T.

Il va de soi que seuls certains de ces indicateurs pourraient être utilisés. De même, il va de soi que d'autres indicateurs pourraient être utilisée pour affiner la régulation de la consigne de couple.

**Revendications**

1. Procédé de commande d'une turbomachine (T) comprenant une soufflante (10) positionnée en amont d'un générateur de gaz et délimitant un flux primaire et un flux secondaire, ledit générateur de gaz étant traversé par le flux primaire et comprenant un compresseur basse pression (11), un compresseur haute pression (12), une chambre de combustion (13), une turbine haute pression (14) et une turbine basse pression (15), ladite turbine basse pression (15) étant reliée audit compresseur basse pression par un arbre de rotation basse pression (10) et ladite turbine haute pression (14) étant reliée audit compresseur haute pression (12) par un arbre de rotation haute pression (22), la turbomachine comprenant un moteur électrique (ME) formant un dispositif d'injection de couple sur l'arbre de rotation haute pression (22), procédé dans lequel une consigne de débit de carburant $Q_{CMD}$ dans la chambre de combustion (13) et une consigne de couple $TRQ_{CMD}$ fourni au moteur électrique (ME) sont déterminés, le procédé de commande comportant :

• une étape de mise en oeuvre d'une première boucle de régulation de carburant (B1) afin de déterminer la consigne de débit de carburant $Q_{CMD}$ comprenant :

i. une étape de détection d'une intention de transitoire de régime TopAccel, TopDecel en fonction d'une différence entre un régime courant NH et une consigne de régime déterminée $NH_{CONS}$,
ii. une étape de détermination d'une consigne de régime de transitoire NHTrajAccelCons, NHTrajDecelCons,
iii. une étape de détermination d'une grandeur de correction de carburant $\Delta Q_{CMD}$ en fonction de la consigne de régime de transitoire NHTrajAccelCons, NHTrajDecelCons et
iv. une étape de détermination de la consigne de débit de carburant $Q_{CMD}$ en fonction de la grandeur de correction de carburant $\Delta Q_{CMD}$

• une étape de mise en oeuvre d'une deuxième boucle de régulation de couple (B2) afin de déterminer la consigne de couple $TRQ_{CMD}$ comprenant

i. une étape de détermination d'une grandeur de correction de couple $\Delta TRQ_{CMD}$ en fonction de la consigne de régime de transitoire NHTrajAccelCons, NHTrajDecelCons et
ii. une étape de détermination de la consigne de couple $TRQ_{CMD}$ en fonction de la grandeur de correction de couple $\Delta TRQ_{CMD}$

2. Procédé de commande selon la revendication 1, comprenant :

• au cours de l'étape de mise en œuvre de la première boucle de régulation de carburant (B1), une étape de détection d'une butée de consigne de carburant TopButeeAccel, TopButeeDecel,
• au cours de l'étape de mise en oeuvre de la deuxième boucle de régulation de couple (B2), une étape de mise à zéro de la consigne de couple $TRQ_{CMD}$, l'étape de mise à zéro de la consigne de couple $TRQ_{CMD}$ étant inhibée en cas de détection d'une intention de transitoire de régime TopAccel, TopDecel et d'une détection d'une butée de consigne de carburant TopButeeAccel, TopButeeDecel.

3. Procédé de commande selon la revendication 2, dans lequel la consigne de couple $TRQ_{CMD}$ est mise à zéro de manière progressive, de préférence, selon au moins un gradient de réduction.

4. Procédé de commande selon la revendication 3, dans lequel le gradient de réduction est fonction du temps de réponse de la première boucle de régulation de carburant (B1).

5. Procédé de commande selon l'une des revendications 1 à 4, comprenant une étape de double intégration de la grandeur de correction de couple $\Delta TRQ_{CMD}$ afin de déterminer la consigne de couple TRQCMD.

6. Procédé de commande selon l'une des revendications 1 à 5, dans laquelle la consigne de couple $TRQ_{CMD}$ est bornée entre une valeur maximale de couple $TRQ_{max}$ déterminée par la structure du moteur électrique ME et une valeur minimale de couple $TRQ_{min}$ déterminée par la structure du moteur électrique ME.

7. Programme d'ordinateur comprenant des instructions pour l'exécution des étapes d'un procédé de commande selon l'une des revendications 1 à 6 lorsque ledit programme est exécuté par un ordinateur.

8. Unité électronique de commande pour turbomachine comprenant une mémoire incluant des instructions d'un programme d'ordinateur selon la revendication 7.

9. Turbomachine comprenant une unité électronique selon la revendication 8.

**Patentansprüche**

1. Verfahren zur Steuerung einer Strömungsmaschine (T), die ein Gebläse (10) umfasst, das einem Gaserzeuger vorgelagert positioniert ist und einen primären Strom und einen sekundären Strom begrenzt, wobei der Gaserzeuger von dem primären Strom durchquert wird und einen Niederdruckkompressor (11), einen Hochdruckkompressor (12), eine Brennkammer (13), eine Hochdruckturbine (14) und eine Niederdruckturbine (15) umfasst, wobei die Niederdruckturbine (15) mit dem Niederdruckkompressor durch eine Niederdruck-Rotationswelle (10) verbunden ist und die Hochdruckturbine (14) mit dem Hochdruckkompressor (12) durch eine Hochdruck-Rotationswelle (22) verbunden ist, wobei die Strömungsmaschine einen Elektromotor (ME) umfasst, der eine Vorrichtung zur Einleitung eines Drehmoments auf der Hochdruck-Rotationswelle (22) umfasst, wobei bei dem Verfahren ein Kraftstoffdurchfluss-Sollwert $Q_{CMD}$ in der Brennkammer (13) und ein dem Elektromotor (ME) bereitgestellter Drehmoment-Sollwert $TRQ_{CMD}$ bestimmt werden, wobei das Steuerungsverfahren aufweist:

   • einen Schritt der Durchführung einer ersten Kraftstoffregelschleife (B1), um den Kraftstoffdurchfluss-Sollwert $Q_{CMD}$ zu bestimmen, der umfasst:

   i. einen Schritt der Detektion einer Regimeübergangsabsicht TopAccel, TopDecel in Abhängigkeit von einer Differenz zwischen einem laufenden Regime NH und einem bestimmten Regimesollwert $NH_{CONS}$,
   ii. einen Schritt der Bestimmung eines Übergangsregimesollwerts NHTrajAccelCons, NHTrajDecelCons,
   iii. einen Schritt der Bestimmung einer Kraftstoffkorrekturgröße $\Delta Q_{CMD}$ in Abhängigkeit vom Übergangsregimesollwert NHTrajAccelCons, NHTrajDecelCons und
   iv. einen Schritt der Bestimmung des Kraftstoffdurchfluss-Sollwerts $Q_{CMD}$ in Abhängigkeit von der Kraftstoffkorrekturgröße $\Delta Q_{CMD}$

   • einen Schritt der Durchführung einer zweiten Drehmomentregelschleife (B2), um den Drehmoment-Sollwert $TRQ_{CMD}$ zu bestimmen, der umfasst:

   i. einen Schritt der Bestimmung einer Drehmomentkorrekturgröße $\Delta TRQ_{CMD}$ in Abhängigkeit vom Übergangsregimesollwert NHTrajAccelCons, NHTrajDecelCons, und
   ii. einen Schritt der Bestimmung des Drehmoment-Sollwerts $TRQ_{CMD}$ in Abhängigkeit von der Drehmomentkorrekturgröße $\Delta TRQ_{CMD}$.

2. Steuerungsverfahren nach Anspruch 1, umfassend:

   • während des Schritts der Durchführung der ersten Kraftstoffregelschleife (B1) einen Schritt der Feststellung eines Kraftstoffsollwertanschlags TopButeeAccel, TopButeeDecel,
   • während des Schritts der Durchführung der zweiten Drehmomentregelschleife (B2) einen Schritt der Nullstellung des Drehmoment-Sollwerts $TRQ_{CMD}$, wobei der Schritt der Nullstellung des Drehmoment-Sollwerts $TRQ_{CMD}$ bei Feststellung einer Regimeübergangsabsicht TopAccel, TopDecel und bei Feststellung eines Kraftstoffsollwertanschlags TopButeeAccel, TopButeeDecel gehemmt wird.

3. Steuerungsverfahren nach Anspruch 2, wobei der Drehmoment-Sollwert $TRQ_{CMD}$ schrittweise auf Null gestellt wird, vorzugsweise gemäß mindestens einem Reduktionsgradienten.

4. Steuerungsverfahren nach Anspruch 3, wobei der Reduktionsgradient von der Antwortzeit der ersten Kraftstoffregelschleife (B1) abhängt.

5. Steuerungsverfahren nach einem der Ansprüche 1 bis 4, umfassend einen Doppelintegrationsschritt der Drehmomentkorrekturgröße $\Delta TRQc_{MD}$ zur Bestimmung des Drehmoment-Sollwerts $TRQ_{CMD}$.

6. Steuerungsverfahren nach einem der Ansprüche 1 bis 5, wobei der Drehmoment-Sollwert TRQCMD zwischen einem maximalen Drehmomentwert $TRQ_{max}$, der von der Struktur des Elektromotors ME bestimmt ist, und einem minimalen Drehmomentwert $TRQ_{min}$, der von der Struktur des Elektromotors ME bestimmt ist, begrenzt ist.

7. Rechnerprogramm, das Befehle für die Ausführung der Schritte eines Steuerungsverfahrens nach einem der Ansprüche 1 bis 6 umfasst, wenn das Programm von einem Rechner ausgeführt wird.

8. Elektronische Steuereinheit für eine Strömungsmaschine, die einen Speicher umfasst, der Befehle eines Rechnerprogramms nach Anspruch 7 einschließt.

9. Strömungsmaschine, die eine elektronische Einheit nach Anspruch 8 umfasst.

**Claims**

1. A method for controlling a turbomachine (T) comprising a fan (10) positioned upstream of a gas generator and delimiting a primary airflow and a secondary airflow, the primary airflow passing through said gas generator which comprises a low-pressure compressor (11), a high-pressure compressor (12), a combustion chamber (13), a high-pressure turbine (14) and a low-pressure turbine (15), said low-pressure turbine (15) being connected to said low-pressure compressor by a low-pressure rotation shaft (10) and said high-pressure turbine (14) being connected to said high-pressure compressor (12) by a high-pressure rotation shaft (22), the turbomachine comprising an electric motor (ME) forming a torque injection device on the high-pressure rotation shaft (22), method wherein a fuel flow set point $Q_{CMD}$ in the combustion chamber (13) and a torque set point $TRQ_{CMD}$ provided to the electric motor (ME) are determined, the control method comprising:

  • a step of implementing a first fuel regulation loop (B1) in order to determine the fuel flow set point $Q_{CMD}$ comprising:

    i. a step of detecting a speed transient intent TopAccel, TopDecel as a function of a difference between a current speed NH and a determined set point speed $NH_{CONS}$,
    ii. a step of determining a transient speed set point NHTrajAccelCons, NHTrajDecelCons,
    iii. a step of determining a fuel correction quantity $\Delta Q_{CMD}$ as a function of the transient speed set point NHTrajAccelCons, NHTrajDecelCons; and
    iv. a step of determining the fuel flow set point $Q_{CMD}$ as a function of the fuel correction quantity $\Delta Q_{CMD}$

  • a step of implementing a second torque regulation loop (B2) in order to determine the torque set point $TRQ_{CMD}$ comprising

    i. a step of determining a torque correction quantity $\Delta TRQ_{CMD}$ as a function of the transient speed set point NHTrajAccelCons, NHTrajDecelCons, and
    ii. a step of determining the torque set point $TRQ_{CMD}$ as a function of the torque correction quantity $\Delta TRQ_{CMD}$.

2. The control method according to claim 1, comprising:

  • during the step of implementing the first fuel regulation loop (B1), a step of detecting a fuel set point stop TopButeeAccel, TopButeeDecel,
  • during the step of implementing the second torque regulation loop (B2), a step of zero resetting the torque set point $TRQ_{CMD}$, the step of zero resetting the torque set point $TRQ_{CMD}$ being inhibited in the case of detection of a speed transient intent TopAccel, TopDecel and detection of a fuel set point stop TopButeeAccel, TopButeeDecel.

3. The control method according to claim 2, wherein the torque set point $TRQ_{CMD}$ is gradually zero reset, preferably according to at least one reduction gradient.

4. The control method according to claim 3, wherein the reduction gradient is a function of the response time of the first fuel regulation loop (B1).

5. The control method according to one of claims 1 to 4, comprising a step of doubly integrating the torque correction quantity $\Delta TRQ_{CMD}$ in order to determine the torque set point $TRQ_{CMD}$.

6. The control method according to one of claims 1 to 5, wherein the torque set point $TRQ_{CMD}$ is bounded between a maximum torque value $TRQ_{max}$ determined by the structure of the electric motor ME and a minimum torque value $TRQ_{min}$ determined by the structure of the electric motor ME.

7. A computer program comprising instructions for executing the steps of a control method according to any one of claims 1 to 6 when said program is executed by a computer.

**8.** An electronic control unit for a turbomachine comprising a memory comprising instructions of a computer program according to claim 7.

**9.** A turbomachine comprising an electronic unit according to claim 8.

## FIGURE 1

## FIGURE 2

## FIGURE 3

## FIGURE 4

FIGURE 5

FIGURE 6

B2

401

NHTrajDecCons

401d

TRQNHTrajDecCmd

404

TRQmax

403

TRQNHTrajAccCmd

ΔTRQ$_{CMD}$

TRQ$_{CMD}$

NHTrajAccCons

401a

TRQmin

NH

TopButeeDecel

ActiveCmdTrqDecel

RAZ

TopDecel

AND

NOT

OR

TopButeeAccel

TopAccel

AND

ActiveCmdTrqAccel

402

FIGURE 7

FIGURE 8

FIGURE 9

## RÉFÉRENCES CITÉES DANS LA DESCRIPTION

**Documents brevets cités dans la description**

- US 20130008171 A
- FR 2977638 A1
- EP 1990519 A2
- US 4543782 A
- US 20030094000 A
- WO 2016020618 A